# EUROPEAN PATENT SPECIFICATION

(11) **EP 2 757 262 B1**
(45) Date of publication and mention of the grant of the patent: **29.08.2018**
(21) Application number: 13809430.5
(22) Date of filing: 18.02.2013
(51) Int. Cl.: F03D 1/00, F03D 9/00, F04B 17/02, F04B 1/053, F03D 15/00, F16H 61/431, F03D 9/28

(54) **HYDRAULIC PUMP, MAINTAINANCE METHOD THEREOF, AND WIND TURBINE GENERATOR**
HYDRAULIKPUMPE, VERFAHREN ZUR IHRER WARTUNG UND WINDTURBINENGENERATOR
POMPE HYDRAULIQUE, SON PROCÉDÉ DE MAINTENANCE ET GÉNÉRATEUR D'UNE TURBINE ÉOLIENNE

(30) Priority: 29.06.2012 WO PCT/JP2012/004217
(43) Date of publication of application: 23.07.2014
(73) Proprietor: Mitsubishi Heavy Industries, Ltd., Tokyo 108-8215 (JP)
(72) Inventor: KAMEDA, Takuro, Tokyo 108-8215 (JP); UCHIDA, Michiya, Tokyo 108-8215 (JP); UEHARA, Osamu, Tokyo 108-8215 (JP); DODSON, Henry, Loanhead Midlothian Lothian EH20 9TB (GB); ROBERTSON, Alasdair, Loanhead Midlothian Lothian EH20 9TB (GB); RAMPEN, William, Loanhead Midlothian Lothian EH20 9TB (GB)
(74) Representative: Intès, Didier Gérard André
(86) International application number: PCT/JP2013/053858
(87) International publication number: WO 2014/002522

(56) References cited:
- EP-A2- 2 151 574
- EP-A2- 2 154 368
- WO-A1-2012/022953
- WO-A1-2012/073502
- WO-A2-2012/073277
- WO-A2-2012/073277
- JP-A- 2001 343 000
- US-A1- 2009 155 095
- US-A1- 2012 063 929

## Description

### TECHNICAL FIELD

This disclosure relates to a hydraulic pump for generating a pressurized oil utilizing rotation of a rotor, a maintenance method thereof, and a wind turbine generator.

### BACKGROUND ART

Conventionally, there has been known a hydraulic pump of a radial piston type which includes a plurality of pistons radially arranged.

For instance, Patent Document 1 discloses a hydraulic pump of a radial piston type used as a power transmitting device, the hydraulic pump including a first rotation member which has a cam surface and a second rotation member which has a plurality of cylinders radially arranged to face the cam surface. Each of the cylinders is configured to guide a respective piston which is in contact with the cam surface and is configured to reciprocate.

A hydraulic pump is preferably used in a hydraulic transmission of a wind turbine generator, for instance. Conventionally, a gearbox was often used as a drive train in a wind turbine generator. However, in accordance with the increase of the size of a wind turbine generator, a wind turbine generator using a hydraulic transmission which includes the above hydraulic pump is attracting attention from the perspective of the weight and the cost.

For instance, Patent Document 2 discloses a hydraulic machine of a radial piston type which serves as a drive train of a wind turbine generator. The radial piston hydraulic machine described in Patent Document 2 includes a piston which reciprocates in a cylinder, a roller attached to the piston, and a cam including a cam surface which contacts the roller. Also, the hydraulic pump disclosed in Patent Document 3 includes a plurality of groups of pistons and cylinders, and a cam which causes the pistons to reciprocate in the cylinders, wherein the above components are housed in a pump housing.

Moreover, although not applied to a wind turbine generator, Patent Documents 4 and 5 similarly disclose a configuration where a component is accommodated in a housing, the component being configured to generate pressurized oil utilizing rotation of a rotor.

### Citation List

### Patent Literature

[Patent Document 1]
   JP2010-19192A
[Patent Document 2]
   US2010/0040470A
[Patent Document 3]
   US2012/0061969A
[Patent Document 4]
   GB2046353A
[Patent Document 5]
   US4104956A

### SUMMARY

### Technical Problem

As a hydraulic pump requires relatively frequent maintenances, excellent maintenance workability is desirable. However, as a hydraulic pump used in a wind turbine generator is normally disposed inside a nacelle, it is occasionally difficult to perform maintenance due to spatial restriction. Thus, it is inefficient to perform maintenance outside the nacelle after carrying the hydraulic pump out of the nacelle, requiring a lot of time and cost for maintenance. Herein, from the perspective of improving the maintenance workability, performing maintenance on a hydraulic pump inside a nacelle is worth considering. However, as nacelle is desirable to be as small as possible for reducing weight, it is difficult to arrange a variety of equipments including a hydraulic pump inside a nacelle and to sufficiently secure a space which can be utilized for maintenance inside the nacelle. Accordingly, a method which enables performing maintenance on a hydraulic pump easily even in a limited space is desirable.

In this regard, Patent Documents 1 to 5 disclose a configuration of a hydraulic pump required for generating pressurized oil, but do not disclose any specific method for performing maintenance on a hydraulic pump.

In view of this, an object of at least some embodiment of the present invention is to provide a hydraulic pump, a maintenance method thereof, and a wind turbine generator which are capable of improving maintenance workability.

### Solution to Problem

A hydraulic pump of a radial piston type according to at least one embodiment of the present invention comprises:
a plurality of pistons arranged along a radial direction of the hydraulic pump;
a plurality of cylinders for guiding the pistons so that the pistons are slidable along the radial direction;
a cylinder block in which a plurality of cylinder block segments are arranged in a circumferential direction of the hydraulic pump, each of the cylinder block segments being provided with at least one of the cylinders; and
a ring cam for reciprocating each of the pistons in each of the cylinders, the ring cam including a plurality of cam segments arranged in the circumferential direction of the hydraulic pump,
wherein a length in the circumferential direction of each of the cylinder block segments is greater than a length in the circumferential direction of the cam segment which is covered by said each of the cylinder block segments.

The above hydraulic pump is configured so that each of a cylinder block and a ring cam is divided in the circumferential direction of the hydraulic pump. That is, the cylinder block is composed of a plurality of cylinder block segments arranged in the circumferential direction of the hydraulic pump, and the ring cam is composed of a plurality of cam segments arranged in the circumferential direction of the hydraulic pump. Each of the cylinder block segments has a length in the circumferential direction larger than a length in the circumferential direction of the cam segment which is covered by said each of the cylinder block segments. As a result, by removing at least one cylinder block segment, it is possible to expose at least one cam segment which has been covered by the at least one cylinder block segment for maintenance. Also, by removing the exposed cam segment, replacement or repair of the cam segment can be easily performed. Maintenance described here includes repair, fitting, replacement, and inspection. Of course, it is possible to perform maintenance on the removed cylinder block itself.

According to the hydraulic pump described above, it is possible to remove and expose a required part only without removing all of the cylinder block and the ring cam upon maintenance. Thus, it is possible to reduce the procedures and time for removing components, and to improve maintenance workability. Also, as it is possible to perform maintenance on a hydraulic pump partially, maintenance can be performed even when only a small space can be secured.

In some embodiments, the hydraulic pump of a radial piston type further comprises:
a plurality of high pressure oil paths and a plurality of low pressure oil paths, each of the high pressure oil paths and each of the low pressure oil paths communicating with each of a plurality of working chambers formed of the cylinders and the pistons;
a plurality of low pressure oil lines or a plurality of low pressure oil tanks which is arranged in the circumferential direction on an outer circumferential side or an inner circumferential side of the cylinder block and which communicates with the low pressure oil paths inside the cylinder block; and
an annular manifold to which the low pressure lines or the low pressure tanks are connected,
wherein the low pressure lines or the low pressure tanks include a plurality of groups each of which is formed of one or more of the low pressure oil lines or one or more of the low pressure oil tanks and is detachable and replaceable with respect to the cylinder block segments and the annular manifold,
and wherein the groups are configured so that, when one or more of the groups is detached from the cylinder block segments and the annular manifold, one of the cylinder block segments which has been covered by the one or more group is exposed.

As a result, it is possible to access the cylinder block without detaching all the low pressure oil lines and the low pressure oil tanks upon maintenance on the cylinder block and surrounding components including the cam. That is, as a space is partially formed by detaching one or more groups (which include one or more low pressure oil lines or one or more low pressure oil tanks) and the cylinder block can be accessed from the space, it is possible to improve efficiency of maintenance and to reduce the working time. Also, as less components are required to be removed, it is possible to perform maintenance easily even in a small space.

In some embodiments, the hydraulic pump further comprises: a plurality of high pressure oil paths and a plurality of low pressure oil paths formed in the cylinder block, each of the high pressure oil paths and each of the low pressure oil paths communicating with each of a plurality of working chambers formed of the cylinders and the pistons, respectively;
a plurality of high pressure valves provided in the high pressure oil paths respectively;
a plurality of low pressure valves provided in the low pressure oil paths respectively; and
a plurality of low pressure oil pipes or a plurality of low pressure oil tanks which is arranged in the circumferential direction on an outer circumferential side or an inner circumferential side of the cylinder block and which communicates with the low pressure oil paths inside the cylinder block,
wherein at least one of the plurality of the high pressure valves or the plurality of the low pressure valves is configured to be removable in a state where the low pressure oil pipe or the low pressure oil tank is detached.

By detaching the low pressure oil lines or the low pressure oil tanks as described above, it is possible to expose at least one of the plurality of the high pressure valves or the plurality of the low pressure valves. Herein, by configuring at least one of the plurality of the high pressure valves or the plurality of the low pressure valves removable, it is possible to improve maintainability of the valves. Especially, the low pressure valves are often configured of an electromagnetic valve. In this case, as the maintenance frequency is normally high, it is possible to further improve maintenance workability by configuring the valves to be easily removable.

In some embodiments, the hydraulic pump further comprises:
a pair of end plates disposed on both sides of the cylinder block, respectively; and
a first seal for sealing a space between adjacent two of the cylinder block segments and a space between each of the end plates and each of the cylinder block segments.

As a result, even in a case where oil has drained from the cam room in which the ring cam is housed, it is possible to prevent leakage of the drain oil to the outside of the hydraulic pump by the first seal.

In some embodiments, the hydraulic pump further comprises:
a second seal for sealing a space between adjacent two of the cylinder block segments, the second seal being disposed on the ring cam side with respect to the first seal,
wherein a drain groove is formed on an outer surface of each of the cylinder block segments at a position between the first seal and the second seal in the radial direction, the drain groove being configured to discharge a drain oil leaked via the second seal.

Normally, as the cam room where the ring cam is housed is maintained to have high pressure than the atmosphere pressure, drain oil from the cam room tends to leak to the outside of the hydraulic pump. Thus, by providing a second seal which is disposed on the ring cam side with respect to the first seal besides the first seal, and thereby achieving a double-sealed structure, it is possible to securely prevent oil leakage from the cam room. In addition, by forming a drain groove between the first seal and the second seal, it is possible to discharge the drain oil which has leaked via the second seal and pooled between the first seal and the second seal.

A maintenance method for a hydraulic pump according to at least embodiment of the present invention is a maintenance method for a hydraulic pump which includes: a cylinder block in which a plurality of cylinder block segments are arranged in a circumferential direction of the hydraulic pump, each of the cylinder block segments being provided with at least one cylinder; a plurality of high pressure oil paths and a plurality of low pressure oil paths each of which is formed in the cylinder block and communicates with of a plurality of working chambers formed of the cylinders, respectively; and a plurality of low pressure oil lines or a plurality of low pressure oil tanks which is arranged in the circumferential direction on an outer circumferential side or an inner circumferential side of the cylinder block and which communicates with the low pressure oil paths inside the cylinder block, and the method comprises:
a detaching step of detaching at least partially the low pressure oil lines or the low pressure tanks; and
a maintenance step of performing maintenance on a component which constitutes the hydraulic pump via an opening formed by detaching at least partially the low pressure oil lines or the low pressure tanks.

According to the above maintenance method for a hydraulic pump, the low pressure oil lines or the low pressure tanks are at least partially detached before performing maintenance. Then, maintenance is performed on the components constituting the hydraulic pump from the space formed by detaching at least partially the low pressure oil lines or the low pressure tanks. As a result, it is possible to easily expose or remove the components of the hydraulic pump which are subjected to maintenance.

In some embodiments, each of the low pressure oil lines of the hydraulic pump is connected to the cylinder block via a flange provided for each of the low pressure oil lines, and, in the detaching step, a bolt for connecting the flange to the cylinder block is removed and then the low pressure oil line is removed from the hydraulic pump.

As a result, by providing a flange at the end of the low pressure oil line and connecting the low pressure oil line with the cylinder block via the flange using a bolt, it is easy to remove the low pressure oil line.

In some embodiments, the maintenance method for a hydraulic pump further comprises, after the maintenance step, a line reconnection step of connecting the low pressure oil line again to the cylinder block via the flange.

As a result, it is possible to smoothly restart the hydraulic pump after maintenance is completed.

In some embodiments, in the maintenance step, the component which is subjected to maintenance is moved outward in the radial direction of the hydraulic pump using a component removal mechanism.

As a result, by using a component removal mechanism, it is possible to easily remove the component which is subjected to maintenance from the hydraulic pump.

In some embodiments, the component removal mechanism includes a jack bolt which is attachable to the component and a frame which supports the jack bolt and is capable of accommodating the component, and
in the maintenance step, the component is removed from the hydraulic pump in a state where the component is moved outward in the radial direction using the jack bolt to be accommodated in the frame.

As a result, by using a jack bolt supported by a frame, it is possible to move the component outward in the radial direction and remove the component from the hydraulic pump to be accommodated in the frame. Also, by moving the component which has been removed from the hydraulic pump in a state where the component is accommodated in the frame, it is possible to move the component to a desired position.

In some embodiments, in the maintenance step, the cylinder block is moved outward in the radial direction of the hydraulic pump via the space.

As a result, by moving the cylinder block or the cam out in the radial direction of the hydraulic pump, it is possible to easily perform maintenance on the component disposed inside the hydraulic pump.

In some embodiments, the component removal mechanism includes a component placement table on which the component having been removed from the hydraulic pump is placed and a lift unit which lifts and lowers the component placement table, and
the component placement table is lifted by the lift unit and then moved closer to a removal target component that is disposed on a lower part of the hydraulic pump among the component, the removal target component is fixed to the component placement table, and then the component placement table is lowered by the lift unit to move the removal target component outward from the hydraulic pump in the radial direction.

According to the above maintenance method, the removal target component is moved outward in the radial direction of the hydraulic pump by fixing the removal target component disposed on the lower part of the hydraulic pump among the component to the component placement table, and then lowering the component table by the lift unit. Thus, it is possible to easily remove a component from the hydraulic pump even when the component is disposed on the lower part of the hydraulic pump and difficult to remove.

In some embodiments, the hydraulic pump includes a plurality of pistons which is reciprocable in the plurality of cylinders respectively and a ring cam which includes a plurality of cam segments arranged in the circumferential direction of the hydraulic pump and which is configured to cause each of the pistons to reciprocate in each of the cylinders, and
in the maintenance step, at least one of the cylinder block segments of the cylinder block is moved outward in the radial direction of the hydraulic pump, and then the at least one cylinder block segment is moved in an axial direction of the hydraulic pump by an axial direction rail included in the component removal mechanism so that at least one of the cam segments of the ring cam is exposed.

As a result, by moving the cylinder block segment outward in the radial direction and then moving the cylinder block segment in the axial direction of the hydraulic pump by an axial direction rail, it is possible to perform maintenance while holding the cylinder block segment on the axial direction rail. Also, the cylinder block segment may be moved back toward the original position along the axial direction rail after having performed maintenance. In this case, the cylinder block segment on which maintenance have been performed can be easily returned to the original position. For example, in a case where a maintenance target component is a cam segment, after performing maintenance on the cam segment which has been covered by a cylinder block segment in a state where the cylinder block segment which has been moved in the axial direction is held on the axial direction rail, the cylinder block segment can be easily returned by the axial direction rail.

Moreover, even in a case where a space for maintenance cannot be secured beside the hydraulic pump in the radial direction, it is possible to easily remove the cylinder block segment because the cylinder block segment is configured moveable in the axial direction.

In some embodiments, the hydraulic pump includes a plurality of pistons which is reciprocable in the plurality of cylinders respectively and a ring cam which includes a plurality of cam segments arranged in the circumferential direction of the hydraulic pump and which is configured to cause each of the pistons to reciprocate in each of the cylinders,
a length in the circumferential direction of each of the cylinder block segments is greater than a length in the circumferential direction of the cam segment which is covered by said each of the cylinder block segments, and
in the maintenance step, at least one of the cylinder block segments of the cylinder block is moved outward in the radial direction of the hydraulic pump, and then the at least one of the cam segments of the ring cam is moved outward in the radial direction from a vacant space formed by removal of the at least one cylinder block segment.

As a result, it is possible to remove or expose only a required part without removing all of the cylinder block and the ring cam upon maintenance. Thus, it is possible to reduce the procedures and time for removing components, and to improve maintenance workability. Also, as it is possible to perform maintenance on a hydraulic pump partially, maintenance can be performed even in a case where only a small space can be secured.

A wind turbine generator according to at least one embodiment of the present invention is a wind turbine generator which generates electrical power utilizing wind, the wind turbine generator comprising:
a rotor configured to rotate upon receiving wind; and
a hydraulic pump configured to generate a pressurized oil utilizing a rotation of the rotor,
wherein the hydraulic pump includes:
   a plurality of pistons arranged along a radial direction of the hydraulic pump;
   a plurality of cylinders for guiding the pistons so that the pitons are slidable along the radial direction, respectively;
   a cylinder block in which a plurality of cylinder block segments are arranged in a circumferential direction of the hydraulic pump, each of the cylinder block segments being provided with at least one of the cylinders; and
   a ring cam which includes a plurality of cam segments arranged in the circumferential direction of the hydraulic ump and is configured to cause each of the pistons to reciprocate in each of the cylinders, and
wherein a length in the circumferential direction of each of the cylinder block segments is greater than a length in the circumferential direction of the cam segment which is covered by said each of the cylinder block segments.

According to the above wind turbine generator, it is possible to remove or expose a required part only without removing all of the cylinder block and the ring cam upon maintenance. Thus, it is possible to reduce the procedures and time for removing components, and to improve maintenance workability. Also, as it is possible to perform maintenance on a hydraulic pump partially for a wind turbine generator, maintenance can be performed even in a case where only a small space can be secured.

According to the present invention, it is possible to remove or expose only a required part without removing all of the cylinder block and the ring cam upon maintenance. Thus, it is possible to reduce the procedures and time for removing components, and to improve maintenance workability. Also, as it is possible to perform maintenance on a hydraulic pump partially, maintenance can be performed even in a case where only a small space can be secured.

### BRIEF DESCRIPTION OF DRAWINGS

Fig. 1 is an illustration of an exemplary configuration of a wind turbine generator according to one embodiment of the present invention.
Fig. 2A is a side view of a hydraulic pump according to one embodiment of the present invention.
Fig. 2B is a view of a hydraulic pump shown in Fig. 2A as seen from the direction of the arrow A.
Fig. 3 is a cross sectional view of Fig. 2.
Fig. 4 is a partial cross sectional view of an exemplary configuration of a hydraulic pump according to one embodiment of the present invention.
Fig. 5A is an oblique perspective view of a cylinder block segment which has a sealing structure according to one embodiment of the present invention.
Fig. 5B is a cross sectional view of Fig. 5B at line C-C.
Fig. 6 is an oblique perspective view of a hydraulic pump to which a component removal mechanism is attached according to the first embodiment.
Fig. 7 is a cross sectional view of Fig. 6 at line D-D.
Fig. 8 is an oblique perspective view of a component removal mechanism and a wind turbine generator according to the second embodiment.
Fig. 9A is an explanatory illustration of the method of removing a component, and a side view of a state before the component is removed.
Fig. 9B is an explanatory illustration of the method of removing a component, and a side view of a state while the component is being removed.
Fig. 9C is an explanatory illustration of the method of removing a component, and a side view of a state after the component has been removed.
Fig. 10 is an oblique perspective view of a hydraulic pump in a state where the component removal mechanism is attached according to the third embodiment.
Fig. 11A is an oblique perspective view of a cylinder block segment where a groove is provided.
Fig. 11B is an enlarged view of a relevant part of the cylinder block segment and the end plate in a state where a key is inserted.
Fig. 12A is an explanatory illustration of the method of removing a component, and an oblique perspective view of a state where the segment is moved outward in the radial direction.
Fig. 12B is an explanatory illustration of the method of removing a component, and an oblique perspective view of a state where the segment is caused to slide in the axial direction.
Fig. 12C is an explanatory illustration of the method of removing a component, and an oblique perspective view of a state where the segment has been moved.

### DETAILED DESCRIPTION OF EMBODIMENTS

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention which is defined by the appended claims.

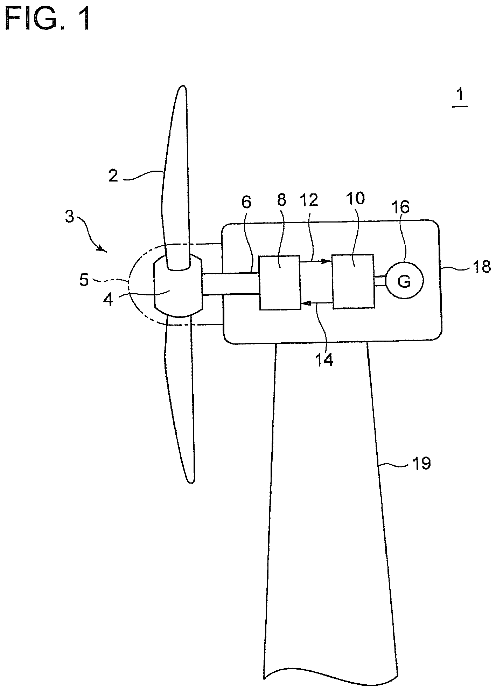

Fig. 1 is an illustration of an exemplary configuration of a wind turbine generator according to one embodiment.

As shown in the drawing, the wind turbine generator 1 includes a rotor 3 composed of at least one blade 2 and a hub 4. The hub 4 may be covered by a hub cover 5.

In one embodiment, a hydraulic pump 8 is coupled to the rotor 3 via a rotation shaft 8. A hydraulic motor 10 is connected to the hydraulic pump 8 via a high pressure oil line 12 and a low pressure oil line 14. Specifically, an outlet of the hydraulic pump 8 is connected to an inlet of the hydraulic motor 10 via the high pressure line 12 and an inlet of the hydraulic pump 8 is connected to an outlet of the hydraulic motor 10 via the low pressure line 14. The hydraulic pump 8 is driven by the rotation shaft 6 to pressurize a working oil and produces a high pressure working oil (pressurized oil). The pressurized oil produced in the hydraulic pump 8 is supplied to the hydraulic motor 10 via the high pressure line 12 and drives the hydraulic motor 10. The low pressure working oil having performed work in the hydraulic motor 10 is returned to the hydraulic pump 8 via the low pressure line 14 provided between the outlet of the hydraulic motor 10 and the inlet of the hydraulic motor 8.

A generator 16 is coupled to the hydraulic motor 10. In one embodiment, the generator 16 is a synchronous generator connected to a utility grid and driven by the hydraulic motor 10. However, the generator 16 is not limited to a synchronous generator.

At least a part of the rotation shaft 6 is covered by a nacelle 18 disposed on the tower 19. In one embodiment, the hydraulic pump 8, the hydraulic motor 10 and the generator 16 are disposed inside the nacelle.

In some embodiments, the hydraulic pump 8 is a hydraulic pump of a radial piston type described below.

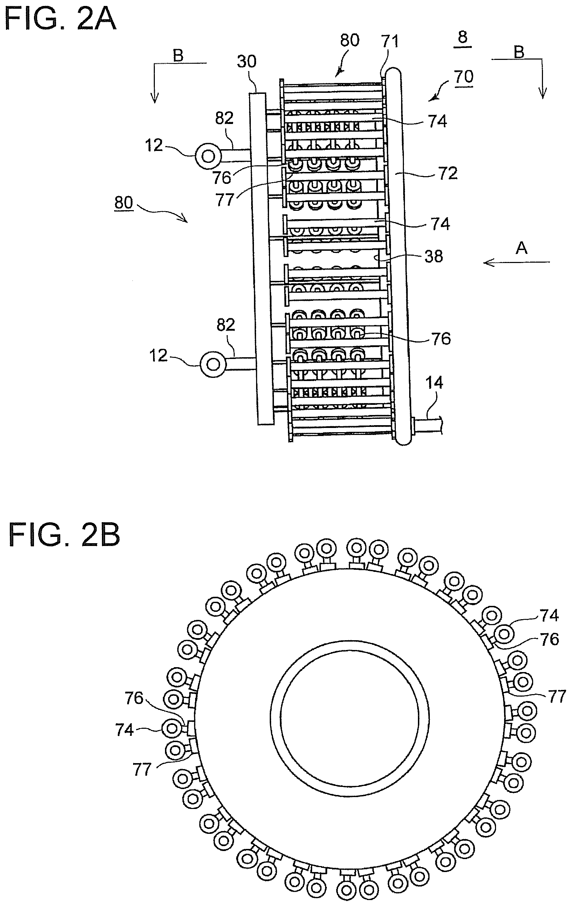

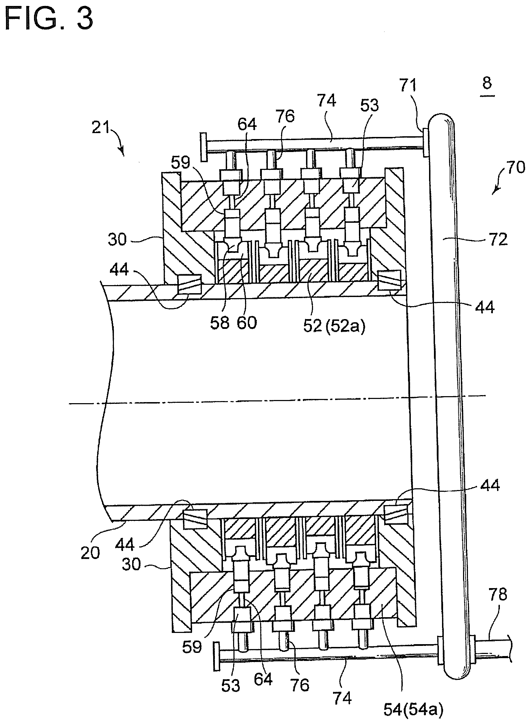

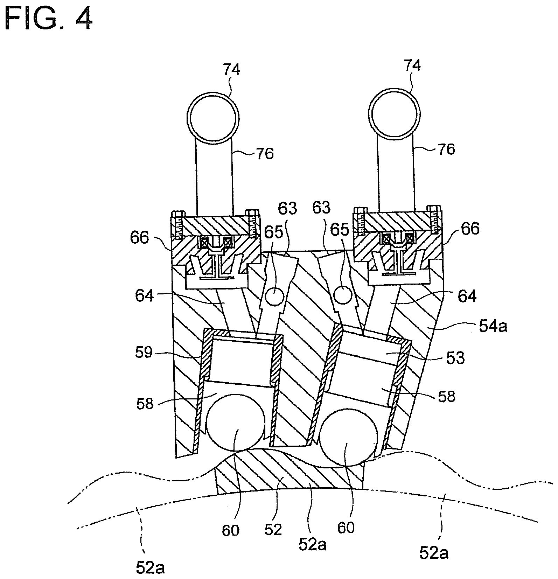

Fig. 2A is a side view of a hydraulic pump according to one embodiment of the present invention. Fig. 2B is a view of a hydraulic pump shown in Fig. 2A from the direction of the arrow A. Fig. 3 is a cross sectional view of Fig. 2. Fig. 4 is a partial cross sectional view of an exemplary configuration of a hydraulic pump according to one embodiment of the present invention.

In the exemplary embodiment shown in the drawings, the hydraulic pump 8 includes a plurality of pistons 58 arranged along the radial direction of the hydraulic pump 8, and a cylinder block 24 where a plurality of cylinders 59 are provided for holding the plurality of pistons 58 slidably, respectively. The pistons 58 are arranged radially at the outer circumferential side of the ring cam 52. A roller 60 is attached to the end of each of the pistons 58, the roller 60 contacting the cam surface of the ring cam 52. The pitons 58 are guided by the cylinders 59 so as to be reciprocable along the radial direction of the hydraulic pump 8. As each of the pistons 58 reciprocates in the respective cylinder 59, the volume of a working chamber 53 formed of the piston 58 and the cylinder 59 cyclically changes. The motion mode is converted between the rotational motion of the hydraulic pump and the reciprocating motion of the pitons 58 accompanied by the above described cyclic volume change. That is, the rotational motion of the ring cam which rotates with the rotation shaft 28 of the hydraulic pump 8 is converted into the reciprocating motion of the pistons 58, thereby causing the cyclic volume change of the working chambers 53 and producing a high pressure working oil (pressurized oil) in the working chamber 53.

The ring cam 52 is fixed on the outer circumference of the pump shaft 20 which rotates with the rotation shaft 6. Also, the ring cam 52 has a cam surface of a continuous wavy shape along the circumferential direction of the pump shaft 20 and is disposed annularly so as to surround the entire circumference of the pump shaft 20. Also, a plurality of rows of ring cams 52 may be provided along the axial direction of the pump shaft 20 (hereinafter, referred to as "the axial direction"). The ring cam 52 is not limited to having a cam surface of a wavy shape and may have a single cam surface and a center misaligned from the center of the shaft, which is known as a cam surface of an eccentric cam. Moreover, the ring cam 52 is divided in the circumferential direction of the pump shaft 20 so as to be removable from the hydraulic pump 8 (pump shaft 20). That is, the ring cam 52 is configured of a plurality of cam segments 52a arranged in the circumferential direction.

The cylinder block 54 is provided at the outer circumferential side of the ring cam 52 and disposed annularly over the entire circumference of the pump shaft 20. Inside the cylinder block 52, a cylinder 59, and a high pressure oil line 63 and a low pressure oil line 64 which communicate with a working chamber 53 in the cylinder block 59 are formed. Also, the cylinder block 52 is divided in the circumferential direction of the pump shaft 20 so as to be removable from the hydraulic pump 58. That is, the cylinder block 54 is composed of a plurality of cylinder block segments 54a arranged in the circumferential direction. In this case, with respect to one cylinder block segment 54a, a plurality of sets may be provided in the axial direction and the circumferential direction of the hydraulic pump 8, each of the sets being composed of the cylinder 59, the high pressure oil line 63 and the low pressure oil line 42. As shown in Fig. 4, a high pressure valve 65 is provided for the high pressure oil path 63 so that the high pressure oil path 63 communicates with the high pressure oil line 12 (see Fig. 1) by opening the high pressure valve 65. A low pressure valve 66 is provided for the low pressure oil path 64 so that the low pressure oil path 64 communicates with the low pressure pipe described below by opening the low pressure valve 66.

As shown in Fig. 4, the length in the circumferential direction of the cylinder block segment 54a is greater than the length in the circumferential direction of the cam segment 52a which is covered by the cylinder block segment 54a. As a result, by removing the at least one cylinder block segment 54a, it is possible to expose the at least one cam segment 52a which has been covered by the cylinder block segment 54a for performing maintenance. Also, by removing the cam segment 52a which has been exposed, it is possible to easily perform replacement or repair of the cam segment 52a. Of course, it is possible to perform maintenance on the removed cylinder block 54 itself.

As described above, according to the hydraulic pump 8, it is possible to remove or expose a required part only without removing all of the cylinder block 54 and the ring cam 52 upon maintenance. Thus, it is possible to reduce the procedures and time for removing components, and to improve maintenance workability. Also, as it is possible to perform maintenance on a hydraulic pump 8 partially, maintenance can be performed even in a case where only a small space can be secured.

At both ends of the cylinder block in the axial direction of the hydraulic pump 8, a first end plate 30 and a second end plate 38 are provided, respectively. The first end plate 30 is disposed so as to cover the end of the cylinder block 54 at the hub 4 side. The second end plate 38 is disposed so as to cover the end of the cylinder block 54 farther from the hub 4.

The first end plate 30 may include a torque arm 30a provided for receiving torque of the hydraulic pump 8, the torque arm 30a being supported at the nacelle 18 side. The first end plate 30 and the second end plate 38 are disposed to face each other and fixed to each other by a tie bolt (not shown) which penetrates the cylinder block 54. Also, each of the cylinder block segments 54 may be fixed to the first end plate 30 and the second end plate 38 by a radial direction bolt (not shown) which is inserted in the radial direction of the hydraulic pump 8.

Hereinafter, the piping configuration of the hydraulic pump 8 will be described.

The hydraulic pump 8 includes a high pressure path group 80 for discharging a high pressure oil from the working chambers 54 into the high pressure oil line 12, and a low pressure oil path group 70 for supplying a low pressure oil from the low pressure line 14 to the working chambers 53.

The high pressure oil path group 80 includes a high pressure oil path 63 formed inside the cylinder block segment 54a, a high pressure manifold (not shown) formed inside the first end plate 30, and a high pressure oil pipe 82 connected to the first end plate 30. The high pressure oil path 63 is provided so as to connect the working chamber 53 of the first end plate 30 and the high pressure manifold of the first end plate 30. A high pressure valve 65 is disposed on the inlet side o the working chamber 53. Each of the high pressure paths in the cylinder block segments 54a is connected to the high pressure manifold, so that the high pressure oil which flows in each of the high pressure oil paths 63 is collected to the high pressure manifold. The high pressure oil pipe 82 is connected to the first end plate 30 via a flange so as transfer the high pressure oil discharged from the high pressure manifold into the high pressure line 12. Herein, the high pressure oil pipe may be regarded as a part of the high pressure line 12.

The low pressure oil path group 70 includes a low pressure oil path 64 formed inside the cylinder block segment 54a, low pressure oil pipes 74, 76 provided at the outer circumferential side of the cylinder block segment 54a, and a low pressure manifold 72. The low pressure oil path 64 is provided so as to connect the working chamber 53 of each of the cylinder block segment 54a and the low pressure pipes 74, 76. A low pressure valve 66 is disposed on the inlet side of the working chamber 53. The low pressure pipes 74, 76 extend in the radial direction of the hydraulic pump 8 and includes a branch pipe 76 connected to the low pressure oil path 64 and a main pipe 74 to which a plurality of branch pipes 76 are connected. The main pipe 74 is connected to the low pressure manifold 72. The low pressure manifold 72 is formed annularly along the outer circumference of the hydraulic pump 8 and in connection with a plurality of main pipes 72. Also, the low pressure oil line 14 is connected to the low pressure manifold 72.

In one embodiment, a flange 77 is provided for one end of each of the branch pipes 7+. The branch pipes 76 are connected to the cylinder block segment 54a by the flange 77 by being fastened to the outer circumferential surface of the cylinder block segment 54a using a bolt. Herein, another flange (not shown) may be provided for the other end of each of the branch pipes 76 so as to be connected to other flange (not shown) provided for the main pipe 74. With this configuration, it is possible to remove the branch pipe 76 only from the hydraulic pump 8. Also, a flange 71 may be provided for an end of the main pipe 74 so as to be connected to the low pressure manifold 72 via the flange 71 using a bolt. With this configuration, it is possible to remove the branch pipes 76 and the main pipe 74 as a group from the hydraulic pump 8 by disconnecting the flanges 77 of the branch pipes 76 and the flange 71 of the main pipe 74. A seal such as an O ring may be provided for each of the flanges for the purpose of preventing leakage of the low pressure oil.

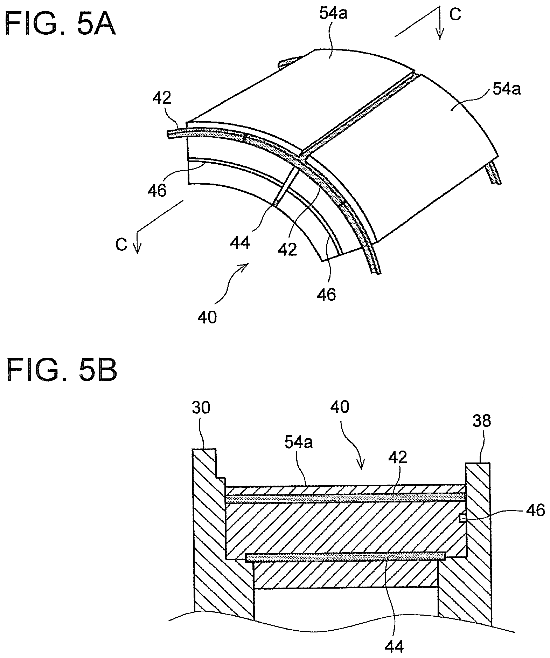

Further, in another embodiment, as shown in Fig. 5A and Fig. 5B, the cylinder block 54 may have a seal structure 40. Fig. 5A is an oblique perspective view of a cylinder block segment which has a sealing structure according to one embodiment of the present invention. Fig. 5B is a cross sectional view of Fig. 5B at line C-C.

In one embodiment, as shown in Fig. 5A and Fig. 5B, the seal structure 40 includes a first seal 42. The first seal 42 is provided in a space between the end plate 30 and the cylinder block segment 54a, a space between two adjacent cylinder block segments 54a, and a space between the cylinder block segment 54a and the second end plate 38 for sealing these spaces. The first seal 42 may be divided in the circumferential direction of the hydraulic pump 8. In this case, adjacent two first seals may be joined with each other using an adhesive agent.

As a result, even in a case the oil has leaked from the cam room in which the ring cam 52 is housed, it is possible to prevent leakage of the drain oil to the outside of the hydraulic pump by the first seal 42.

Further, the seal structure 40 may include a second seal 44. The second seal 44 is disposed on the ring cam 52 side with respect to the first seal 42 so as to seal a space between two adjacent cylinder block segments 54a.

Moreover, on the outer surface of each of the cylinder block segments 54a, at the position between the first seal 42 and the second seal 44 in the radial direction of the hydraulic pump 8, a drain groove 46 may be formed for discharging the drain oil which has leaked via the second seal 44. The drain oil discharged from the drain groove 46 is returned to the low pressure oil tank, for instance.

Normally, as the cam room which houses the ring cam 52 is maintained to have higher pressure than the atmosphere pressure, the drain oil from the cam room tends to leak to the outside of the hydraulic pump 8. Thus, by providing a second seal 44 which is disposed on the ring cam 52 side with respect to the first seal 42 besides the first seal 42, and thereby achieving a double-sealed structure, it is possible to securely prevent oil leakage from the cam room. In addition, by forming a drain groove 46 between the first seal 42 and the second seal 44, it is possible to discharge the drain oil which has leaked via the second seal 44 and pooled between the first seal 42 and the second seal 44.

Next, in reference to Figs. 2 to 4, a maintenance method for the hydraulic pump 8 according to the embodiment will be described. Herein, a case where the ring cam segment 52a is subjected to maintenance is illustrated as an example. Besides the ring cam segment 52a, other components such as the cylinder block segment 54a, the low pressure valve 66 and the high pressure valve 65 may be subjected to maintenance. As long as the component constitutes the hydraulic pump 8, the component which is subjected to maintenance is not limited further.

First, the detaching step of detaching the low pressure oil pipes 74, 76 positioned corresponding to the ring cam segment 52a which is subjected to maintenance. That is, the low pressure oil pipes 74, 76 at the position in the circumferential direction corresponding to the ring cam segment 52a which is subjected to maintenance is removed from the cylinder block segment 54a. For instance, a bolt of the flanges 77 of the branch pipes 76 which is connected to one cylinder segment 54 is removed, and the flange 71 of the main pipe 74 to which the branch pipes 76 are connected is disconnected. As a result, without necessarily removing all of the low pressure pipes 74, 76, the cylinder block segment 54a can be accessed. That is, as a space is partially formed by removing one or more group which corresponds to the maintenance-subject position and which includes one or more low pressure oil pipes, and thus the cylinder block segments can be accessed from the space, it is possible to improve efficiency of the maintenance work and to reduce the working time. Also, as less components are required to be removed, it is possible to easily perform maintenance even in a small space.

Then, after removing the low pressure pipes 74, 76, the cylinder block segment 54a which covers the ring cam segment 52a which is subjected to maintenance is removed. The method of removing the cylinder block segment 54a will be described in the following first embodiment to third embodiment.

The cylinder block segment 54a has a length in the circumferential direction larger than a length in the circumferential direction of the ring cam segment 52a. Thus, by removing the cylinder block 54a, the ring cam segment 52a which is subjected to maintenance is entirely exposed to the outside. The ring cam segment 52a may be repaired in a state of being attached to the pump shaft 20, may be removed from the hydraulic pump 9 to be repaired outside, or may be replaced with a new ring cam segment 52a.

After having completed the maintenance as described above, the cylinder block segment 54a is connected to the low pressure oil pipes 74, 76 via the flanges. As a result, it is possible to restart the hydraulic pump 8 smoothly after the maintenance is completed.

Also, in another configuration, in a case where the low pressure valve 66 is subjected to maintenance, the low pressure valve 66 is configured to be removable from the cylinder block segment 54a. As a result, the low pressure valve 66 can be accessed by only removing the low pressure oil pipes 74, 76 and thus it is possible to easily replace the low pressure valve 66. The low pressure valve is often configured of an electromagnetic valve. In this case, the maintenance frequency normally increases. Thus, it is possible to further improve the maintenance workability by configuring the low pressure valve to be removable as described above. Herein, the high pressure valve may be configured similarly. In this case, after removing the low pressure oil pipes 74, 76, the cylinder block segment 54a is removed from the hydraulic pump 8 to be performed maintenance.

A method of removing the cylinder block segment 54a after having removed the low pressure pipes 74, 76 will be described below in detail.

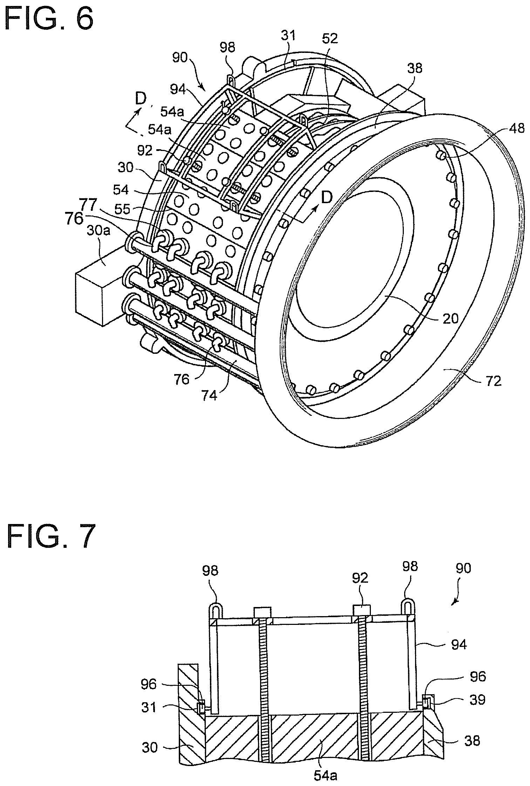

Fig. 6 is an oblique perspective view of a hydraulic pump to which a component removal mechanism is attached according to the first embodiment. Fig. 7 is a cross sectional view of Fig. 6 at line D-D.

As shown in Figs. 6 and 7, in the first embodiment, after removing the low pressure oil pipes 74, 76, the cylinder block segment 54a is moved outward in the radial direction using a component removal mechanism 90. Herein, the cylinder block segment 54a is configured by dividing the cylinder block 54 into a plurality of pieces in the circumferential direction at the dividing surface 55.

In one embodiment, the component removal mechanism 90 includes a jack bolt attached to the cylinder block segment 54a and a frame 94 which supports the jack bolt 92. The jack bolt 92 is attached to the frame 94 at one end and is attached to the cylinder block segment 54a at the other end, thereby moving the cylinder block segment 54a outward in the radial direction of the hydraulic pump 8. A plurality of jack bolts 92 may be provided so that the cylinder block segment 54a can be securely removed.

Further, a wheel 96 may be attached to the frame 94, the wheel 96 being configured to engage with circumferential direction rails 38, 39 formed on the first end plate 30 and the second end plate 38, respectively. As a result, the frame 94 is movable in the circumferential direction of the hydraulic pump 8 using the circumferential direction rails 31, 39.

Then, it is possible to move the cylinder block segment 54a which has been moved outward by the component removal mechanism from the hydraulic pump 8 to a position where the cylinder block segment 54a can be easily removed (for instance, an upper part of the hydraulic pump 8 where lifting by a crane can be easily performed) in the circumferential direction. Also, by using the jack bolt 92 supported by the frame 94, it is possible to move the cylinder block segment 54a outward in the radial direction and remove the cylinder block 54a from the hydraulic pump to be accommodated in the frame 94. Moreover, as the wheel 96 which engages with the circumferential rails 31, 39 is attached to the frame 94, it is possible to smoothly move the cylinder block segment 54a in the circumferential direction.

Next, a removing method of the cylinder block segment 54a using the component removal mechanism 90 having the above configuration will be described.

First, the frame 94 of the component removal mechanism is moved in the circumferential direction of the hydraulic pump 9 using the wheel 96 and the circumferential direction rail 31, 39. Once the component removal mechanism 90 reaches the position of the segment 54a which is a removal target component, the frame 94 is fixed to at least one of the end plates 30, 38 and then the jack bolt 92 is attached to the cylinder block segment 54a. Subsequently, the cylinder block segment 54a is moved outward in the radial direction by the jack bolt 92 and accommodated in the frame 94. Then, in a state where the cylinder block segment 54a is housed in the frame 94, the frame 94 is move in the circumferential direction to the upper part of the hydraulic pump 8, and then the cylinder block segment 54a is removed along with the frame 94. Herein, the position where the frame is removed from the hydraulic pump 8 is not limited to the upper part of the hydraulic pump 8, but may be any position where removal can be easily performed. Also, the configuration may not include the wheel 96 and the circumferential direction rails 31, 39. In this case, the cylinder block segment 54a is accommodated in the frame 94 and then removed in the radial direction at the same position.

Further, a suspension part 98 may be provided for the frame 94 and the frame 94 may be moved in the circumferential direction using a crane attached to the suspension part 98. Also, the frame 94 may be lifted up to be removed from the hydraulic pump 8 using a crane attached to the suspension part 98. In this case, a radial direction rail (not shown) which is continuous from the circumferential direction rail 31, 39 is provided for each of the first end plate 30 and the second end plate 38. Then, the wheel 96 is deviated from the circumferential direction rail 31, 39 by the radial direction rail and thereby the frame 94 is removed from the hydraulic pump 8.

According to the above embodiment, by moving a component of the hydraulic pump 8 such as the cylinder block segment 54a outward in the radial direction of the hydraulic pump 8 using the component removal mechanism 90, it is possible to perform careful maintenance on the component.

Further, the cylinder block 54 or the cam 52, which is divided in the circumferential direction into a plurality of cylinder block segments 54a or a plurality of cam segments 52a respectively, may be removed in the radial direction of the hydraulic pump 8. As a result, it is possible to easily perform maintenance on a component of the hydraulic pump 8.

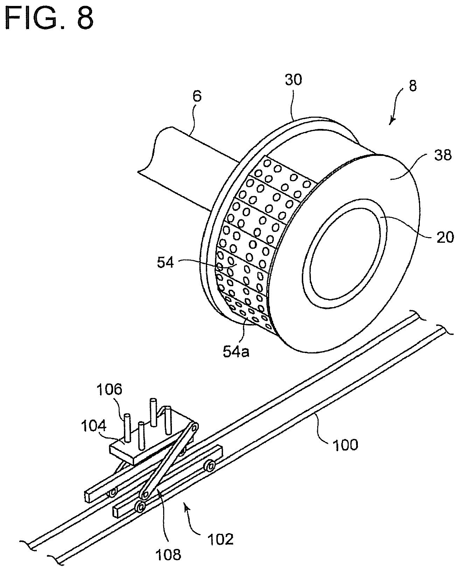

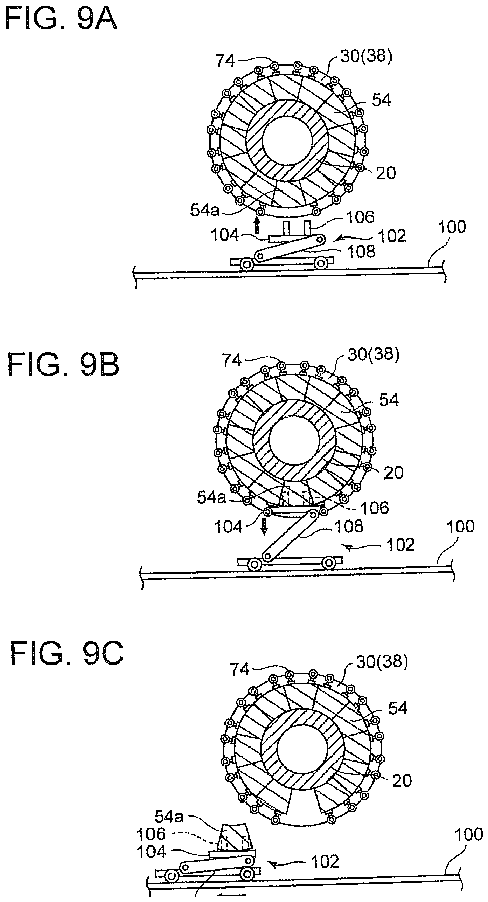

Fig. 8 is an oblique perspective view of a component removal mechanism and a wind turbine generator according to the second embodiment. Fig. 9A is an explanatory illustration of the method to remove a component, and a side view of a state before the component is removed. Fig. 9B is an explanatory illustration of the method to remove a component, and a side view of a state while the component is being removed. Fig. 9C is an explanatory illustration of the method to remove a component, and a side view of a state after the component has been removed. Herein, in Fig. 8, the low pressure oil pipes 74, 76 are omitted (or the drawing illustrates a state where all of the low pressure oil pipes 74, 76 are removed). Also, the description below illustrates a case where the removal target component is the cylinder block segment 54a.

In one embodiment, the component removal mechanism 102 includes a component placement table 104 on which the cylinder block segment 54a being a removal target is placed, a fixing part 106 which fixes the cylinder segment 54a onto the component placement table 104, and a lift unit 108 for lifting and lowering the component placement table 104. An actuator of hydraulic type, pneumatic type, electric type and the like may be used as a lift unit 108.

Next, in reference to Figs. 9A to 9C, the method of removing a component using the component removal mechanism 102 will be described. Herein, Fig. 9A is a side view of a state before the component is removed, Fig. 9B is a side view of a state while the component is being removed, and Fig. 9C is a side view of a state after the component has been removed.

As shown in Fig. 9A, firstly, the component removal mechanism 102 is moved to below the hydraulic pump 8 using a carrying rail 100. Herein, the component placement table 104 is lowered by a lift unit 108 so that the component removal mechanism 102 does not collide with the hydraulic pump 8.

Once the component removal mechanism 102 has moved to below the hydraulic pump 8, the component placement table 104 is lifted by the lift unit 108 as shown in Fig. 9B, and then the cylinder block segment 54a positioned at the lower part of the hydraulic pump 8 is fixed to the component placement table 104. After the fixing, a radial direction bolt 46 which fastens the cylinder block segment 54a to the first end plate 30 and the second end plate is removed. As a result, the cylinder block segment 54a is placed on the component placement table 104 in a state of being fixed to the table 104. Then, the component placement table 104 is lowered again.

Next, as shown in Fig. 9C, the component removal mechanism 102 is moved by the carrying rail 100 in a state where the cylinder block segment 54a is placed, thereby carrying the cylinder block segment 54a to a desired position.

According to the above embodiment, the removal target component is moved outward in the radial direction of the hydraulic pump 8 by fixing the removal target component disposed on the lower part of the hydraulic pump 8 among the component to the component placement table 104, and then lowering the component table 104 using the lift unit 108. Thus, it is possible to easily remove a component from the hydraulic pump 8 even when the component is disposed on the lower part of the hydraulic pump 8 and difficult to remove.

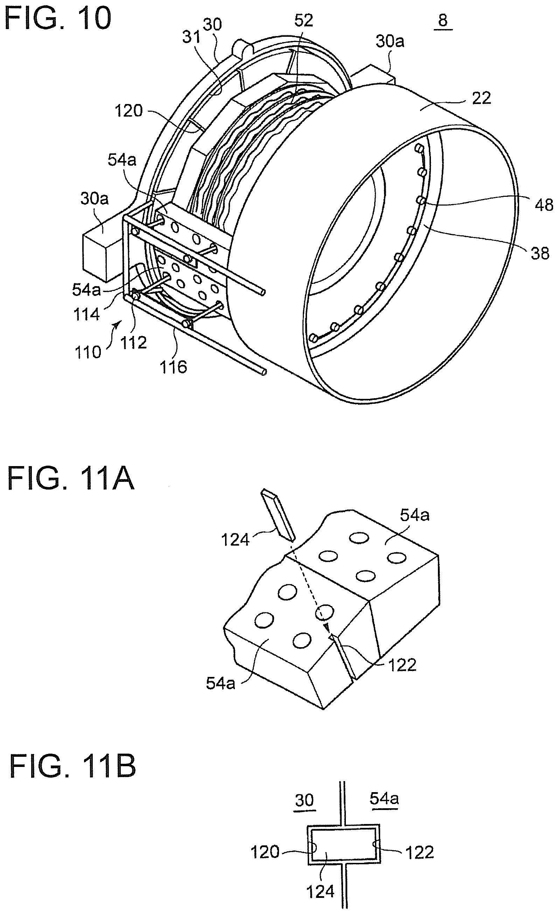

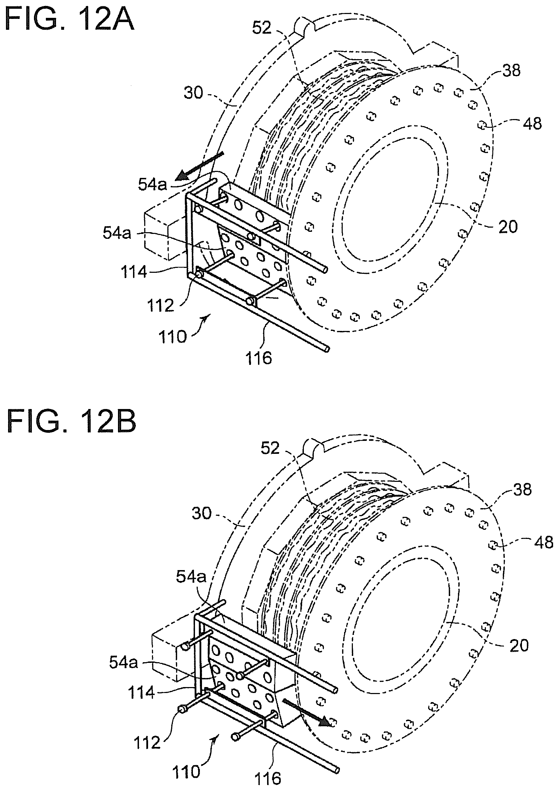

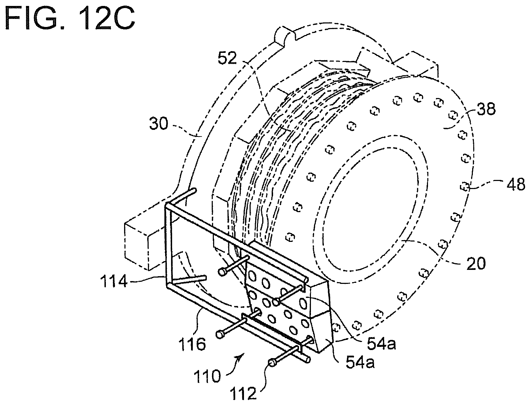

Fig. 10 is an oblique perspective view of a hydraulic pump in a state where the component removal mechanism is attached according to the third embodiment. Fig. 11A is an oblique perspective view of a cylinder block segment where a groove is provided. Fig. 11B is an enlarged view of a relevant part of the cylinder block segment and the end plate in a state where a key is inserted. Fig. 12A is an explanatory illustration of the method of removing a component, and an oblique perspective view of a state where the segment is moved outward in the radial direction. Fig. 12B is an oblique perspective view of a state where the segment is caused to slide in the axial direction. Fig. 12C is an oblique perspective view of a state where the segment has been moved. Herein, in Figs. 10 to 12C, the cylinder block segments 54a besides the cylinder block segment 54a which is subjected to maintenance is omitted (or the drawings illustrate a state where all of the cylinder block segments 54a are removed). Also, the description below illustrates a case where the removal target component is the cylinder block segment 54a.

As shown in Figs. 10 to 12C, in one embodiment, the component removal mechanism 110 includes a jack bolt 112 attached to the cylinder block segment 54a and a frame 114 which supports the jack bolt 112. The jack bolt 112 is attached to the frame 114 at one end and is attached to the cylinder block segment 54a at the other end, thus being configured to move the cylinder block segment 54a outward in the radial direction of the hydraulic pump 8.

A wheel may be attached to the frame 114, the wheel being configured to engage with circumferential direction rails 38, 39 (see Fig. 6) formed on the first end plate 30 and the second end plate 38, respectively. As a result, the frame 114 is movable in the circumferential direction of the hydraulic pump 8 using the circumferential direction rails 31, 39.

Also, an axial direction rail 116 for moving the jack bolt 112 in the axial direction is attached to the frame 114. By moving the jack bolt 112 to which the cylinder block segment 54a is attached on the axial direction rail 116, it is possible to move the cylinder block segment 54a in the axial direction.

Further, as shown in Figs. 11A and 11B, at least one of the first end plate 30 and the second end plate 38 may include a key groove formed in the radial direction on the surface which faces the other one of the end plates. In this case, corresponding to the key groove 120, a groove 122 is provided in the radial direction on the end surface of the cylinder block segment 54a. Upon returning the cylinder block segment 54a after maintenance is completed, the position of the key groove 120 of the end plate 30, 38 and the position of the groove 122 of the cylinder block segment 54a are matched, and then a key 124 is inserted into a space formed by matching the key groove 120 and the groove 122. As a result, it is possible to accurately dispose the cylinder block segment 54a on a determined position with respect to the circumferential direction of the hydraulic pump 8, and to prevent the cylinder block segment 54a from moving in the circumferential direction after being disposed on the determined position. Also, in another exemplary configuration, a projection corresponding to the key groove 120 may be provided for at least one of the first end plate 30 and the second end plate 38 so that the key groove 120 and the projection engage with each other. With this configuration, upon removing the cylinder block segment 54a attached to the jack bolt 112 in the radial direction, the projection of the cylinder block segment 54a is guided by the key groove 120, which makes it possible to smoothly remove the cylinder block segment 54a.

Next, in reference to Figs. 12A to 12C, a method of removing the cylinder block segment 54a using the component removal mechanism 110 which has the above configuration will be described.

As shown in Fig. 12A, in the beginning, the frame 114 of the component removal mechanism 110 is moved in the circumferential direction of the hydraulic pump 8 by the wheel and the circumferential direction rail. Once the frame 114 reaches the position of the cylinder block segment 54a which is the removal target, the frame 114 is fixed to at least one of the end plates 30, 38 and the jack bolt 112 is attached to the cylinder block segment 54a. Next, as shown in Fig. 12B, the cylinder block segment 54a is moved outward in the radial direction using the jack bolt so as to be accommodated in the frame 114.

Then, as shown in Fig. 12C, the frame 114 which has accommodated the cylinder block segment 54a is moved along the axial direction rail 116. After moving the frame 114, maintenance may be performed on the maintenance target component: in a state where the frame 114 holds the cylinder block segment 54; in a state where the cylinder block 54a is removed from the frame 114; or in a state where the cylinder block segment 54a is removed along with the frame 114.

After the maintenance, the jack bolt to which the cylinder block segment 54a is attached is moved along the axial direction rail 116 to the original position at the outer side in the radial direction, and then the cylinder block segment 54a is returned to the original position at the inner side in the radial direction using the jack bolt 112.

Described below is an example of maintenance which can be performed by the above maintenance device. As the ring cam 52 which has been covered by the cylinder block 54 is at least partially exposed by moving the cylinder block segment 54a, it is possible to perform maintenance on the ring cam 52. Also, by dividing the ring cam 52 in the circumferential direction, it is possible to move the ring cam 52 outward in the direction and perform maintenance. Moreover, in a state where the cylinder block segment 54a is supported by the frame 114 as shown in Fig. 12C, the inner circumferential face of the cylinder block segment 54a, that is, the face at the pump shaft 20 side, is exposed. Thus, it is possible to perform maintenance on the cylinders 59 (see Fig. 3) disposed on the inner circumferential face of the cylinder block segment 24a. Further, as the piston 58 (including the roller 60) is removed and moved along with the cylinder block segment 54a, it is possible to perform maintenance on the piston 58 as well from the inner circumferential face of the cylinder block segment 54a.

According to the above embodiment, after moving outward and removing the cylinder block segment 54a in the radial direction, by moving the cylinder block segment 54a in the axial direction of the hydraulic pump 8 using the axial direction rail 116, it is possible to perform maintenance while holding the cylinder block segment 54a on the axial direction rail 116. Also, the cylinder block segment 54a may be moved toward the original position along the axial direction rail 116, which makes it possible to easily return the segment on which maintenance has been completed to the original position. Moreover, even when a space for maintenance cannot be sufficiently secured at the side in the radial direction of the hydraulic pump 8, as the cylinder block segment 54a is moved in the axial direction, it is possible to remove the cylinder block segment 54a.

Embodiments of the present invention were described in detail above, but the present invention is not limited thereto, and various amendments and modifications may be implemented within a scope that does not depart from the present invention.

For example, while two adjacent branch pipes 76 arranged in the circumferential direction of the hydraulic pump 8 are connected to one main pipe 74 in the above embodiment, one branch pipe 76 may be connected to one main pipe 74. The low pressure tank communicates with a plurality of low pressure oil paths 64. For instance, a plurality of low pressure oil paths 64 formed in the cylinder block 54a may be connected to one low pressure oil tank. The low pressure oil tank is connected to the low pressure manifold 72 via piping. Also, the low pressure oil tank is configured removable from the cylinder block segment 54a and the low pressure manifold 72. In this case, at least one low pressure oil tank should be removed so as to expose one cylinder block segment 54a.

Further, while the low pressure oil pipes 74, 76 or the low pressure oil tank is exposed to the interior space of the nacelle in the above embodiment, a casing may be provided so as to cover the outer circumferential side of the low pressure oil pipes 74, 76 or the low pressure oil tank as a countermeasure against the noise.

Moreover, while the hydraulic pump 8 used in the hydraulic transmission of the wind turbine generator 1 has been described in the embodiment, the use of the hydraulic pump 8 is not limited to the wind turbine generator and the hydraulic pump 8 may be used for other purposes.

### REFERENCE SIGNS LIST

- 1: Wind turbine generator
- 2: Blade
- 3: Rotor
- 6: Rotation shaft
- 8: Hydraulic pump
- 10: Hydraulic motor
- 16: Generator
- 20: Pump shaft
- 21: Pump housing
- 30: First end plate
- 31, 39: Circumferential direction rail
- 38: Second end plate
- 40: Seal structure
- 42: First seal
- 44: Second seal
- 46: Drain
- 52: Ring cam
- 52a: Cam segment
- 53: Working chamber
- 54: Cylinder block
- 54a: Cylinder block segment
- 56: Cylinder
- 58: Piston
- 59: Cylinder
- 60: Roller
- 90, 102, 110: Component removal mechanism
- 92, 112: Jack bolt
- 94, 114: Frame
- 98: Suspension part
- 100: Carrying rail
- 104: Placement table
- 106: Fixing part
- 108: Lift unit
- 116: Axial direction rail
- 120: Radial direction rail
- 122: Projection

## Claims

1. A hydraulic pump (8) of a radial piston type, comprising:
a plurality of pistons (58) arranged along a radial direction of the hydraulic pump (8);
a plurality of cylinders (59) for guiding the pistons (58) so that the pistons (58) are slidable along the radial direction;
a cylinder block (54) in which a plurality of cylinder block segments (54a) are arranged in a circumferential direction of the hydraulic pump (8) so as to be removable therefrom, each of the cylinder block segments (54a) being provided with at least one of the cylinders (59); and
a ring cam (52) for reciprocating each of the pistons (58) in each of the cylinders (59), the ring cam (52) including a plurality of cam segments (52a) arranged in the circumferential direction of the hydraulic pump (8) so as to be removable therefrom, **characterized in that** a length in the circumferential direction of each of the cylinder block segments (54a) is greater than a length in the circumferential direction of the cam segment (52a) which is covered by said each of the cylinder block segments (54a).

2. The hydraulic pump (8) according to claim 1, further comprising:
a plurality of high pressure oil paths and a plurality of low pressure oil paths, each of the high pressure oil paths and each of the low pressure oil paths communicating with each of a plurality of working chambers (53) formed of the cylinders (59) and the pistons (58);
a plurality of low pressure oil pipes (74, 76) or a plurality of low pressure oil tanks which is arranged in the circumferential direction on an outer circumferential side or an inner circumferential side of the cylinder block (54) and which communicates with the low pressure oil paths inside the cylinder block (54); and
an annular manifold to which the low pressure pipes or the low pressure tanks are connected,
wherein the low pressure pipes or the low pressure tanks include a plurality of groups each of which is formed of one or more of the low pressure oil pipes (74, 76) or one or more of the low pressure oil tanks and is detachable and replaceable with respect to the cylinder block segments (54a) and the annular manifold,
and wherein the groups are configured so that, when one or more of the groups is detached from the cylinder block segments (54a) and the annular manifold, one of the cylinder block segments (54a) which has been covered by the one or more group is exposed.

3. The hydraulic pump (8) according to claim 1, further comprising:
a plurality of high pressure oil paths and a plurality of low pressure oil paths formed in the cylinder block (54), each of the high pressure oil paths and each of the low pressure oil paths communicating with each of a plurality of working chambers (53) formed of the cylinders (59) and the pistons (58), respectively;
a plurality of high pressure valves provided in the high pressure oil paths respectively;
a plurality of low pressure valves provided in the low pressure oil paths respectively; and
a plurality of low pressure oil pipes (74, 76) or a plurality of low pressure oil tanks which is arranged in the circumferential direction on an outer circumferential side or an inner circumferential side of the cylinder block (54) and which communicates with the low pressure oil paths inside the cylinder block (54),
wherein at least one of the plurality of the high pressure valves or the plurality of the low pressure valves is configured to be removable in a state where the low pressure oil pipe or the low pressure oil tank is detached.

4. The hydraulic pump (8) according to any one of claims 1 to 3, further comprising:
a pair of end plates disposed on both sides of the cylinder block (54), respectively; and
a first seal (42) for sealing a space between two adjacent cylinder block segments (54a) and a space between each of the end plates and each of the cylinder block segments (54a).

5. The hydraulic pump (8) according to claim 4, further comprising:
a second seal (44) for sealing a space between two adjacent cylinder block segments (54a), the second seal (44) being disposed on the ring cam (52) side with respect to the first seal (42),
wherein a drain groove is formed on an outer surface of each of the cylinder block segments (54a) at a position between the first seal (42) and the second seal (44) in the radial direction, the drain groove being configured to discharge a drain oil leaked via the second seal (44).

6. A maintenance method for a hydraulic pump (8), the hydraulic pump (8) including: a cylinder block (54) in which a plurality of cylinder block segments (54a) are arranged in a circumferential direction of the hydraulic pump (8), each of the cylinder block segments (54a) being provided with at least one cylinder; a plurality of high pressure oil paths and a plurality of low pressure oil paths each of which is formed in the cylinder block (54) and communicates with of a plurality of working chambers (53) formed of the cylinders (59), respectively; and a plurality of low pressure oil pipes (74, 76) or a plurality of low pressure oil tanks which is arranged in the circumferential direction on an outer circumferential side or an inner circumferential side of the cylinder block (54) and which communicates with the low pressure oil paths inside the cylinder block (54), the method comprising:
a detaching step of detaching at least partially the low pressure oil pipes (74, 76) or the low pressure tanks; and
a maintenance step of performing maintenance on a component which constitutes the hydraulic pump (8) via an opening formed by detaching at least partially the low pressure oil pipes (74, 76) or the low pressure tanks,
wherein the cylinder block (54) includes a plurality of cylinder block segments (54a) arranged in a circumferential direction of the hydraulic pump (8),
wherein the hydraulic pump (8) includes a plurality of cam segments (52a) arranged in the circumferential direction of the hydraulic pump (8),
wherein a length in the circumferential direction of each of the cylinder block segments (54a) is greater than a length in the circumferential direction of the cam segment (52a) which is covered by said each of the cylinder block segments (54a), and
wherein the maintenance step includes:
removing at least one cylinder block segment (54a),
removing at least one cam segment (52a) having been exposed by removing said at least one cylinder block segment (54a).

7. The maintenance method for a hydraulic pump (8) according to claim 6,
wherein each of the low pressure oil pipes (74, 76) of the hydraulic pump (8) is connected to the cylinder block (54) via a flange provided for each of the low pressure oil pipes, and
wherein, in the detaching step, a bolt for connecting the flange to the cylinder block (54) is removed and then the low pressure oil pipe (74, 76) is removed from the hydraulic pump (8).

8. The maintenance method for a hydraulic pump (8) according to claim 7, further comprising:
after the maintenance step, a pipe reconnection step of connecting the low pressure oil pipe (74, 76) again to the cylinder block (54) via the flange.

9. The maintenance method for a hydraulic pump (8) according to claim 6,
wherein, in the maintenance step, the component which is subjected to maintenance is moved outward in the radial direction of the hydraulic pump (8) using a component removal mechanism (90, 102, 110).

10. The maintenance method for a hydraulic pump (8) according to claim 9,
wherein the component removal mechanism (90, 102, 110) includes a jack bolt (92, 112) which is attachable to the component and a frame (94, 114) which supports the jack bolt (92, 112) and is capable of accommodating the component, and
wherein, in the maintenance step, the component is removed from the hydraulic pump (8) in a state where the component is moved outward in the radial direction using the jack bolt (92, 112) to be accommodated in the frame (94, 114).

11. The maintenance method for a hydraulic pump according to any of claims 6 to 10,
wherein, in the maintenance step, the cylinder block (54) is moved outward in the radial direction of the hydraulic pump (8) via the space.

12. The maintenance method for a hydraulic pump according to claim 9,
wherein the component removal mechanism (90, 102, 110) includes a component placement table (104) on which the component having been removed from the hydraulic pump (8) is placed and a lift unit (108) which lifts and lowers the component placement table (104), and
wherein the component placement table (104) is lifted by the lift unit (108) and then moved closer to a removal target component that is disposed on a lower part of the hydraulic pump (8) among the component, the removal target component is fixed to the component placement table (104), and then the component placement table (104) is lowered by the lift unit (108) to move the removal target component outward from the hydraulic pump (8) in the radial direction.

13. The maintenance method for a hydraulic pump (8) according to claim 9,
wherein the hydraulic pump (8) includes a plurality of pistons (58) which is reciprocable in the plurality of cylinders (59) respectively and a ring cam (52) which includes a plurality of cam segments (52a) arranged in the circumferential direction of the hydraulic pump (8) and which is configured to cause each of the pistons (58) to reciprocate in each of the cylinders (59), and
wherein, in the maintenance step, at least one of the cylinder block segments (54a) of the cylinder block (54) is moved outward in the radial direction of the hydraulic pump (8), and then the at least one cylinder block segment (54a) is moved in an axial direction of the hydraulic pump (8) by an axial direction rail included in the component removal mechanism (90, 102, 110) so that at least one of the cam segments (52a) of the ring cam (52) is exposed.

14. The maintenance method for a hydraulic pump (8) according to claim 6,
wherein the hydraulic pump (8) includes a plurality of pistons (58) which is reciprocable in the plurality of cylinders (59) respectively and a ring cam (52) which includes a plurality of cam segments (52a) arranged in the circumferential direction of the hydraulic pump (8) and which is configured to cause each of the pistons (58) to reciprocate in each of the cylinders (59),
wherein a length in the circumferential direction of each of the cylinder block segments (54a) is greater than a length in the circumferential direction of the cam segment (52a) which is covered by said each of the cylinder block segments (54a), and
wherein, in the maintenance step, at least one of the cylinder block segments (54a) of the cylinder block (54) is moved outward in the radial direction of the hydraulic pump (8), and then the at least one of the cam segments (52a) of the ring cam (52) is moved outward in the radial direction from a vacant space formed by removal of the at least one cylinder block segment (54a).

15. A wind turbine generator (1) which generates electrical power utilizing wind, the wind turbine generator (1) comprising:
a rotor (3) configured to rotate upon receiving wind; and
a hydraulic pump (8) according to any one of claims 1 to 5, configured to generate a pressurized oil utilizing a rotation of the rotor (3).

## Patentansprüche

1. Hydraulikpumpe (8) vom Radialkolbentyp, umfassend:
mehrere Kolben (58), die entlang einer radialen Richtung der Hydraulikpumpe (8) angeordnet sind,
mehrere Zylinder (59) zum Führen der Kolben (58), derart, dass die Kolben (58) entlang der radialen Richtung verschiebbar sind,
einen Zylinderblock (54), in dem mehrere Zylinderblocksegmente (54a) in einer Umfangsrichtung der Hydraulikpumpe (8) derart angeordnet sind, dass sie davon entfernbar sind, wobei jedes der Zylinderblocksegmente (54a) mit mindestens einem der Zylinder (59) versehen ist, und
einen Ringnocken (52) zum Hin- und Herbewegen jedes der Kolben (58) in jedem der Zylinder (59), wobei der Ringnocken (52) mehrere Nockensegmente (52a) umfasst, die in der Umfangsrichtung der Hydraulikpumpe (8) derart angeordnet sind, dass sie davon entfernbar sind,
**dadurch gekennzeichnet, dass** eine Länge in der Umfangsrichtung jedes der Zylinderblocksegmente (54a) größer ist als eine Länge in der Umfangsrichtung des Nockensegments (52a), welches durch jedes der Zylinderblocksegmente (54a) abgedeckt ist.

2. Hydraulikpumpe (8) nach Anspruch 1, ferner umfassend:
mehrere Hochdruckölwege und mehrere Niederdruckölwege, wobei jeder der Hochdruckölwege und jeder der Niederdruckölwege mit jedem von mehreren Arbeitsräumen (53) kommunizieren, die aus den Zylindern (59) und den Kolben (58) gebildet sind,
mehrere Niederdruckölrohre (74, 76) oder mehrere Niederdruckölbehälter, die in der Umfangsrichtung auf einer Außenumfangsseite oder einer Innenumfangsseite des Zylinderblocks (54) angeordnet sind und die mit den Niederdruckölwegen innerhalb des Zylinderblocks (54) kommunizieren, und
einen ringförmigen Verteiler, mit dem die Niederdruckrohre oder die Niederdruckbehälter verbunden sind,
wobei die Niederdruckrohre oder die Niederdruckbehälter mehrere Gruppen umfassen, von denen jede aus einem oder mehreren der Niederdruckölrohre (74, 76) oder einem oder mehreren der Niederdruckölbehälter gebildet ist und in Bezug auf die Zylinderblocksegmente (54a) und den ringförmigen Verteiler abnehmbar und austauschbar ist,
und wobei die Gruppen derart ausgebildet sind, dass, wenn eine oder mehrere der Gruppen von den Zylinderblocksegmenten (54a) und dem ringförmigen Verteiler abgenommen wird/werden, eines der Zylinderblocksegmente (54a), welches durch die eine oder mehreren Gruppen abgedeckt war, freigelegt wird.

3. Hydraulikpumpe (8) nach Anspruch 1, ferner umfassend:
mehrere Hochdruckölwege und mehrere Niederdruckölwege, die in dem Zylinderblock (54) gebildet sind, wobei jeder der Hochdruckölwege und jeder der Niederdruckölwege mit jedem von mehreren Arbeitsräumen (53) kommunizieren, die jeweils aus den Zylindern (59) und den Kolben (58) gebildet sind,
mehrere Hochdruckventile, die jeweils in den Hochdruckölwegen vorgesehen sind,
mehrere Niederdruckventile, die jeweils in den Niederdruckölwegen vorgesehen sind, und
mehrere Niederdruckölrohre (74, 76) oder mehrere Niederdruckölbehälter, die in der Umfangsrichtung auf einer Außenumfangsseite oder einer Innenumfangsseite des Zylinderblocks (54) angeordnet sind und die mit den Niederdruckölwegen innerhalb des Zylinderblocks (54) kommunizieren,
wobei mindestens eines aus den mehreren Hochdruckventilen oder den mehreren Niederdruckventilen dazu ausgebildet ist, in einem Zustand entfernbar zu sein, in dem das Niederdruckölrohr oder der Niederdruckölbehälter abgenommen ist.

4. Hydraulikpumpe (8) nach einem beliebigen der Ansprüche 1 bis 3, ferner umfassend:
ein Paar von Endplatten, die jeweils auf beiden Seiten des Zylinderblocks (54) angeordnet sind, und
eine erste Dichtung (42) zum Abdichten eines Raums zwischen zwei benachbarten Zylinderblocksegmenten (54a) und eines Raums zwischen jeder der Endplatten und jedem der Zylinderblocksegmente (54a).

5. Hydraulikpumpe (8) nach Anspruch 4, ferner umfassend:
eine zweite Dichtung (44) zum Abdichten eines Raums zwischen zwei benachbarten Zylinderblocksegmenten (54a), wobei die zweite Dichtung (44) in Bezug auf die erste Dichtung (42) auf der Seite des Ringnockens (52) angeordnet ist,
wobei an einer Außenoberfläche von jedem der Zylinderblocksegmente (54a) an einer Position zwischen der ersten Dichtung (42) und der zweiten Dichtung (44) in der radialen Richtung eine Ablassnut ausgebildet ist, wobei die Ablassnut dazu ausgebildet ist, ein Ablassöl, das über die zweite Dichtung (44) austritt, abzuführen.

6. Wartungsverfahren für eine Hydraulikpumpe (8), wobei die Hydraulikpumpe (8) umfasst: einen Zylinderblock (54), in dem mehrere Zylinderblocksegmente (54a) in einer Umfangsrichtung der Hydraulikpumpe (8) angeordnet sind, wobei jedes der Zylinderblocksegmente (54a) mit mindestens einem Zylinder versehen ist, mehrere Hochdruckölwege und mehrere Niederdruckölwege, wobei jeder in dem Zylinderblock (54) ausgebildet ist und mit mehreren Arbeitsräumen (53) kommuniziert, die jeweils aus den Zylindern (59) gebildet sind, und mehrere Niederdruckölrohre (74, 76) oder mehrere Niederdruckölbehälter, die in der Umfangsrichtung auf einer Außenumfangsseite oder einer Innenumfangsseite des Zylinderblocks (54) angeordnet sind und die mit den Niederdruckölwegen innerhalb des Zylinderblocks (54) kommunizieren, wobei das Verfahren umfasst:
einen Abnehmschritt des mindestens teilweise Abnehmens der Niederdruckölrohre (74, 76) oder der Niederdruckbehälter und
einen Wartungsschritt des Durchführens einer Wartung an einer Komponente, welche die Hydraulikpumpe (8) bildet, über eine Öffnung, die durch mindestens teilweises Abnehmen der Niederdruckölrohre (74, 76) oder der Niederdruckbehälter gebildet wird,
wobei der Zylinderblock (54) mehrere Zylinderblocksegmente (54a) umfasst, die in einer Umfangsrichtung der Hydraulikpumpe (8) angeordnet sind,
wobei die Hydraulikpumpe (8) mehrere Nockensegmente (52a) umfasst, die in der Umfangsrichtung der Hydraulikpumpe (8) angeordnet sind,
wobei eine Länge in der Umfangsrichtung jedes der Zylinderblocksegmente (54a) größer ist als eine Länge in der Umfangsrichtung des Nockensegments (52a), welches durch jedes der Zylinderblocksegmente (54a) abgedeckt ist, und
wobei der Wartungsschritt umfasst:
Entfernen von mindestens einem Zylinderblocksegment (54a),
Entfernen von mindestens einem Nockensegment (52a), das durch Entfernen des mindestens einen Zylinderblocksegments (54a) freigelegt wurde.

7. Wartungsverfahren für eine Hydraulikpumpe (8) nach Anspruch 6,
wobei jedes der Niederdruckölrohre (74, 76) der Hydraulikpumpe (8) mit dem Zylinderblock (54) über einen Flansch verbunden ist, der für jedes der Niederdruckölrohre vorgesehen ist, und
wobei in dem Abnehmschritt eine Schraube zum Verbinden des Flansches mit dem Zylinderblock (54) entfernt wird und das Niederdruckölrohr (74, 76) dann von der Hydraulikpumpe (8) entfernt wird.

8. Wartungsverfahren für eine Hydraulikpumpe (8) nach Anspruch 7, ferner umfassend:
nach dem Wartungsschritt einen Rohrwiederverbindungsschritt des Wiederverbindens des Niederdruckölrohres (74, 76) mit dem Zylinderblock (54) über den Flansch.

9. Wartungsverfahren für eine Hydraulikpumpe (8) nach Anspruch 6,
wobei in dem Wartungsschritt die Komponente, die einer Wartung unterzogen wird, mittels eines Komponentenentfernungsmechanismus (90, 102, 110) in der radialen Richtung der Hydraulikpumpe (8) nach außen bewegt wird.

10. Wartungsverfahren für eine Hydraulikpumpe (8) nach Anspruch 9,
wobei der Komponentenentfernungsmechanismus (90, 102, 110) eine Abdrückschraube (92, 112), die an der Komponente befestigbar ist, und einen Rahmen (94, 114), der die Abdrückschraube (92, 112) trägt und in der Lage ist, die Komponente aufzunehmen, umfasst, und
wobei in dem Wartungsschritt die Komponente von der Hydraulikpumpe (8) in einem Zustand entfernt wird, in dem die Komponente mittels der Abdrückschraube (92, 112) in der radialen Richtung nach außen bewegt wird, um in dem Rahmen (94, 114) aufgenommen zu werden.

11. Wartungsverfahren für eine Hydraulikpumpe nach einem beliebigen der Ansprüche 6 bis 10,
wobei in dem Wartungsschritt der Zylinderblock (54) über den Raum in der radialen Richtung der Hydraulikpumpe (8) nach außen bewegt wird.

12. Wartungsverfahren für eine Hydraulikpumpe nach Anspruch 9,
wobei der Komponentenentfernungsmechanismus (90, 102, 110) einen Komponentenablagetisch (104), auf dem die Komponente, die von der Hydraulikpumpe (8) entfernt wurde, abgelegt wird, und eine Hubeinheit (108), die den Komponentenablagetisch (104) anhebt und absenkt, umfasst, und
wobei der Komponentenablagetisch (104) durch die Hubeinheit (108) angehoben und dann näher zu einer Entfernungszielkomponente, die unter den Komponenten an einem unteren Teil der Hydraulikpumpe (8) angeordnet ist, hinbewegt wird, die Entfernungszielkomponente an dem Komponentenablagetisch (104) befestigt wird und der Komponentenablagetisch (104) dann durch die Hubeinheit (108) abgesenkt wird, um die Entfernungszielkomponente in der radialen Richtung von der Hydraulikpumpe (8) nach außen zu bewegen.

13. Wartungsverfahren für eine Hydraulikpumpe (8) nach Anspruch 9,
wobei die Hydraulikpumpe (8) mehrere Kolben (58) umfasst, die jeweils in den mehreren Zylindern (59) hin- und herbewegbar sind, und einen Ringnocken (52) umfasst, der mehrere Nockensegmente (52a) umfasst, die in der Umfangsrichtung der Hydraulikpumpe (8) angeordnet sind, und der dazu ausgebildet ist, zu bewirken, dass sich jeder der Kolben (58) in jedem der Zylinder (59) hin- und herbewegt, und
wobei in dem Wartungsschritt mindestens eines der Zylinderblocksegmente (54a) des Zylinderblocks (54) in der radialen Richtung des Hydraulikpumpe (8) nach außen bewegt wird und das mindestens eine Zylinderblocksegment (54a) dann durch eine Axialrichtungsschiene, die in dem Komponentenentfernungsmechanismus (90, 102, 110) beinhaltet ist, in einer axialen Richtung der Hydraulikpumpe (8) derart bewegt wird, dass mindestens eines der Nockensegmente (52a) des Ringnockens (52) freigelegt wird.

14. Wartungsverfahren für eine Hydraulikpumpe (8) nach Anspruch 6,
wobei die Hydraulikpumpe (8) mehrere Kolben (58) umfasst, die jeweils in den mehreren Zylindern (59) hin- und herbewegbar sind, und einen Ringnocken (52) umfasst, der mehrere Nockensegmente (52a) umfasst, die in der Umfangsrichtung der Hydraulikpumpe (8) angeordnet sind, und der dazu ausgebildet ist, zu bewirken, dass sich jeder der Kolben (58) in jedem der Zylinder (59) hin- und herbewegt,
wobei eine Länge in der Umfangsrichtung jedes der Zylinderblocksegmente (54a) größer ist als eine Länge in der Umfangsrichtung des Nockensegments (52a), welches durch jedes der Zylinderblocksegmente (54a) abgedeckt ist, und
wobei in dem Wartungsschritt mindestens eines der Zylinderblocksegmente (54a) des Zylinderblocks (54) in der radialen Richtung des Hydraulikpumpe (8) nach außen bewegt wird und das mindestens eine der Nockensegmente (52a) des Ringnockens (52) dann von einem leeren Raum, der durch das Entfernen des mindestens einen Zylinderblocksegments (54a) gebildet wird, in der radialen Richtung nach außen bewegt wird.

15. Windkraftanlage (1), die elektrische Energie durch Nutzung von Wind erzeugt, wobei die Windkraftanlage (1) umfasst:
einen Rotor (3), der dazu ausgebildet ist, sich bei Beaufschlagung mit Wind zu drehen, und
eine Hydraulikpumpe (8) nach einem beliebigen der Ansprüche 1 bis 5, die dazu ausgebildet ist, durch Nutzung einer Rotation des Rotors (3) ein Drucköl zu erzeugen.

## Revendications

1. Pompe hydraulique (8) de type à pistons radiaux comprenant :
une pluralité de pistons (58) agencés le long d'une direction radiale de la pompe hydraulique (8) ;
une pluralité de cylindres (59) pour guider les pistons (58) de sorte que les pistons (58) peuvent coulisser le long de la direction radiale ;
un bloc-cylindres (54) dans lequel une pluralité de segments de bloc-cylindres (54a) sont agencés dans une direction circonférentielle de la pompe hydraulique (8) afin de pouvoir être retirés de cette dernière, chacun des segments de bloc-cylindres (54a) étant prévu avec au moins l'un des cylindres (59) ; et
une came annulaire (52) pour faire effectuer un mouvement de va-et-vient à chacun des pistons (58) dans chacun des cylindres (59), la came annulaire (52) comprenant une pluralité de segments de came (52a) agencés dans la direction circonférentielle de la pompe hydraulique (8) afin de pouvoir être retirés de cette dernière,
**caractérisée en ce qu'**une longueur dans la direction circonférentielle de chacun des segments de bloc-cylindres (54a) est supérieure à une longueur dans la direction circonférentielle du segment de came (52a) qui est recouvert par chacun desdits segments de bloc-cylindres (54a).

2. Pompe hydraulique (8) selon la revendication 1, comprenant en outre :
une pluralité de trajectoires d'huile haute pression et une pluralité de trajectoires d'huile basse pression, chacune des trajectoires d'huile haute pression et chacune des trajectoires d'huile basse pression communiquant avec chacune d'une pluralité de chambres de travail (53) formées avec les cylindres (59) et les pistons (58) ;
une pluralité de tuyaux d'huile basse pression (74, 76) ou une pluralité de réservoirs d'huile basse pression qui est agencée dans la direction circonférentielle sur un côté circonférentiel externe ou un côté circonférentiel interne du bloc-cylindres (54) et qui communique avec les trajectoires d'huile basse pression à l'intérieur du bloc-cylindres (54) ; et
un collecteur annulaire auquel les tuyaux basse pression ou les réservoirs basse pression sont raccordés,
dans laquelle les tuyaux basse pression ou les réservoirs basse pression comprennent une pluralité de groupes dont chacun est formé avec un ou plusieurs des tuyaux d'huile basse pression (74, 76) ou un ou plusieurs réservoirs d'huile basse pression et est détachable et remplaçable par rapport aux segments de bloc-cylindres (54a) et au collecteur annulaire,
et dans laquelle les groupes sont configurés de sorte que, lorsqu'un ou plusieurs des groupes sont détachés des segments de bloc-cylindres (54a) et du collecteur annulaire, l'un des segments de bloc-cylindres (54a) qui a été recouvert par les un ou plusieurs groupes est exposé.

3. Pompe hydraulique (8) selon la revendication 1, comprenant en outre :
une pluralité de trajectoires d'huile haute pression et une pluralité de trajectoires d'huile basse pression formées dans le bloc-cylindres (54), chacune des trajectoires d'huile haute pression et chacune des trajectoires d'huile basse pression communiquant avec chacune d'une pluralité de chambres de travail (53) formées avec les cylindres (59) et les pistons (58), respectivement ;
une pluralité de valves haute pression prévues dans les trajectoires d'huile haute pression respectivement ;
une pluralité de valves basse pression prévues dans les trajectoires d'huile basse pression respectivement ; et
une pluralité de tuyaux d'huile basse pression (74, 76) ou une pluralité de réservoirs d'huile basse pression qui est agencée dans la direction circonférentielle sur un côté circonférentiel externe ou un côté circonférentiel interne du bloc-cylindres (54) et qui communiquent avec les trajectoires d'huile basse pression à l'intérieur du bloc-cylindres (54),
dans laquelle au moins l'une de la pluralité de valves haute pression ou la pluralité de valves basse pression est configurée pur être retirée dans un état dans lequel le tuyau d'huile basse pression ou le réservoir d'huile basse pression est détaché.

4. Pompe hydraulique (8) selon l'une quelconque des revendications 1 à 3, comprenant en outre :
une paire de plaques d'extrémité disposées des deux côtés du bloc-cylindres (54) respectivement ; et
un premier joint d'étanchéité (42) pour sceller un espace entre deux segments de bloc-cylindres (54a) adjacents et un espace entre chacune des plaques d'extrémité et chacun des segments de bloc-cylindres (54a).

5. Pompe hydraulique (8) selon la revendication 4, comprenant en outre :
un second joint d'étanchéité (44) pour sceller un espace entre deux segments de bloc-cylindres (54a) adjacents, le second joint d'étanchéité (44) étant disposé du côté de la came annulaire (52) par rapport au premier joint d'étanchéité (42),
dans laquelle une rainure de drain est formée sur une surface externe de chacun des segments de bloc-cylindres (54a) dans une position entre le premier joint d'étanchéité (42) et le second joint d'étanchéité (44) dans la direction radiale, la rainure de drain étant configurée pour décharger une huile de vidange qui a fui via le second joint d'étanchéité (44).

6. Procédé de maintenance pour une pompe hydraulique (8), la pompe hydraulique (8) comprenant : un bloc-cylindres (54) dans lequel une pluralité de segments de bloc-cylindres (54a) sont agencés dans une direction circonférentielle de la pompe hydraulique (8), chacun des segments de bloc-cylindres (54a) étant prévu avec au moins un cylindre ; une pluralité de trajectoires d'huile haute pression et une pluralité de trajectoires d'huile basse pression, dont chacune est formée dans le bloc-cylindres (54) et communique avec une pluralité de chambres de travail (53) formées avec les cylindres (59), respectivement ; et une pluralité de tuyaux d'huile basse pression (74, 76) ou une pluralité de réservoirs d'huile basse pression qui est agencée dans la direction circonférentielle sur un côté circonférentiel externe ou un côté circonférentiel interne du bloc-cylindres (54) et qui communique avec les trajectoires d'huile basse pression à l'intérieur du bloc-cylindres (54), le procédé comprenant :
une étape de détachement consistant à détacher au moins partiellement les tuyaux d'huile basse pression (74, 76) ou les réservoirs basse pression ; et
une étape de maintenance consistant à réaliser l'entretien sur un composant qui constitue la pompe hydraulique (8) via une ouverture formée en détachant au moins partiellement les tuyaux d'huile basse pression (74, 76) ou les réservoirs basse pression,
dans lequel le bloc-cylindres (54) comprend une pluralité de segments de bloc-cylindres (54a) agencés dans une direction circonférentielle de la pompe hydraulique (8),
dans lequel la pompe hydraulique (8) comprend une pluralité de segments de came (52a) agencés dans la direction circonférentielle de la pompe hydraulique (8),
dans lequel une longueur dans la direction circonférentielle de chacun des segments de bloc-cylindres (54a) est supérieure à une longueur dans la direction circonférentielle du segment de came (52a) qui est recouvert par ledit chacun des segments de bloc-cylindres (54a), et
dans lequel l'étape de maintenance comprend les étapes suivantes :
retirer au moins un segment de bloc-cylindres (54a),
retirer au moins un segment de came (52a) ayant été exposé en retirant ledit au moins un segment de bloc-cylindres (54a).

7. Procédé de maintenance pour une pompe hydraulique (8) selon la revendication 6,
dans lequel chacun des tuyaux d'huile basse pression (74, 76) de la pompe hydraulique (8) est raccordé au bloc-cylindres (54) via une bride prévue pour chacun des tuyaux d'huile basse pression, et
dans lequel, à l'étape de détachement, un boulon pour raccorder la bride au bloc-cylindres (54) est retiré et ensuite le tuyau d'huile basse pression (74, 76) est retiré de la pompe hydraulique (8).

8. Procédé de maintenance pour une pompe hydraulique (8) selon la revendication 7, comprenant en outre :
après l'étape de maintenance, une étape de reconnexion de tuyau consistant à raccorder le tuyau d'huile basse pression (74, 76) à nouveau au bloc-cylindres (54) via la bride.

9. Procédé de maintenance pour une pompe hydraulique (8) selon la revendication 6,
dans lequel, à l'étape de maintenance, le composant qui est soumis à la maintenance est déplacé vers l'extérieur dans la direction radiale de la pompe hydraulique (8) en utilisant un mécanisme de retrait de composant (90, 102, 110).

10. Procédé de maintenance pour une pompe hydraulique (8) selon la revendication 9,
dans lequel le mécanisme de retrait de composant (90, 102, 110) comprend une vis de déblocage (92, 112) qui peut être fixée au composant et un bâti (94, 114) qui supporte la vis de déblocage (92, 112) et peut loger le composant, et
dans lequel, à l'étape de maintenance, le composant est retiré de la pompe hydraulique (8) dans un état dans lequel le composant est déplacé vers l'extérieur dans la direction radiale à l'aide de la vis de déblocage (92, 112) pour être logé dans le bâti (94, 114).

11. Procédé de maintenance pour une pompe hydraulique selon l'une quelconque des revendications 6 à 10,
dans lequel, à l'étape de maintenance, le bloc-cylindres (54) est déplacé vers l'extérieur dans la direction radiale de la pompe hydraulique (8) via l'espace.

12. Procédé de maintenance pour une pompe hydraulique selon la revendication 9,
dans lequel le mécanisme de retrait de composant (90, 102, 110) comprend une table de mise en place de composant (104) sur laquelle le composant ayant été retiré de la pompe hydraulique (8) est placé, et une unité de levage (108) qui lève et abaisse la table de mise en place de composant (104), et
dans lequel la table de mise en place de composant (104) est levée par l'unité de levage (108) et ensuite déplacée plus à proximité d'un composant cible de retrait qui est disposé sur une partie inférieure de la pompe hydraulique (8) parmi le composant, le composant cible de retrait est fixé sur la table de mise en place de composant (104), et ensuite la table de mise en place de composant (104) est abaissée par l'unité de levage (108) pour déplacer le composant cible de retrait vers l'extérieur de la pompe hydraulique (8) dans la direction radiale.

13. Procédé de maintenance pour une pompe hydraulique (8) selon la revendication 9,
dans lequel la pompe hydraulique (8) comprend une pluralité de pistons (58) qui peut effectuer un mouvement de va-et-vient dans la pluralité de cylindres (59) respectivement et une came annulaire (52) qui comprend une pluralité de segments de came (52a) agencés dans la direction circonférentielle de la pompe hydraulique (8) et qui est configurée pour amener chacun des pistons (58) à effectuer un mouvement de va-et-vient dans chacun des cylindres (59), et
dans lequel, à l'étape de maintenance, au moins l'un des segments de bloc-cylindres (54a) du bloc-cylindres (54) est déplacé vers l'extérieur dans la direction radiale de la pompe hydraulique (8) et ensuite le au moins un segment de bloc-cylindres (54a) est déplacé dans une direction axiale de la pompe hydraulique (8) par un rail de direction axial compris dans le mécanisme de retrait de composant (90, 102, 110) de sorte qu'au moins l'un des segments de came (52a) de la came annulaire (52) est exposé.

14. Procédé de maintenance pour une pompe hydraulique (8) selon la revendication 6,
dans lequel la pompe hydraulique (8) comprend une pluralité de pistons (58) qui peuvent effectuer un mouvement de va-et-vient dans la pluralité de cylindres (59) respectivement et une came annulaire (52) qui comprend une pluralité de segments de came (52a) agencés dans la direction circonférentielle de la pompe hydraulique (8) et qui est configurée pour amener chacun des pistons (58) à effectuer un mouvement de va-et-vient dans chacun des cylindres (59),
dans lequel une longueur dans la direction circonférentielle de chacun des segments de bloc-cylindres (54a) est supérieure à une longueur dans la direction circonférentielle du segment de came (52a) qui est recouvert par chacun desdits segments de bloc-cylindres (54a), et
dans lequel, à l'étape de maintenance, au moins l'un des segments de bloc-cylindres (54a) du bloc-cylindres (54) est déplacé vers l'extérieur dans la direction radiale de la pompe hydraulique (8), et ensuite le au moins un des segments de came (52a) de la came annulaire (52) est déplacé vers l'extérieur dans la direction radiale à partir d'un espace vacant formé par le retrait du au moins un segment de bloc-cylindres (54a).

15. Générateur d'éolienne (1) qui génère de l'énergie électrique à l'aide du vent, le générateur d'éolienne (1) comprenant :
un rotor (3) configuré pour tourner au moment de la réception du vent ; et
une pompe hydraulique (8) selon l'une quelconque des revendications 1 à 5, configurée pour générer une huile sous pression en utilisant une rotation du rotor (3).
